# EUROPEAN PATENT SPECIFICATION

(11) **EP 2 120 505 B1**
(45) Date of publication and mention of the grant of the patent: **05.03.2014**
(21) Application number: 09151583.3
(22) Date of filing: 29.01.2009
(51) Int. Cl.: H04W 72/04, H04W 84/18

(54) **System and wireless resource allocating apparatus for controlling vehicle-to-vehicle and road-to-vehicle communication**
System und Gerät zur Verwaltung von Funkressourcen für die Fahrzeug-zu-Fahrzeug-Kommunikation und die Fahrzeug-zu-Strasse-Kommunikation
Système et appareil d'attribution de ressources sans fil pour la communication entre véhicules et d'un véhicule avec la route

(30) Priority: 07.05.2008 JP 2008121626
(43) Date of publication of application: 18.11.2009
(73) Proprietor: Fujitsu Limited, Kawasaki-shi, Kanagawa 211-8588 (JP)
(72) Inventor: Machida,, Mamoru c/o FUJITSU LIMITED, Kawasaki-shi, Kanagawa 211-8588 (JP)
(74) Representative: Stebbing, Timothy Charles

(56) References cited:
- WO-A-2008/015414
- US-A1- 2005 254 449

## Description

The present invention relates to a wireless resource allocating apparatus, an on-vehicle apparatus, a wireless resource allocating system, and a wireless resource allocating method.

An ITS (Intelligent Transport System) has been proposed that integrates roads and vehicles as one system to realize services that aim at improvement of safety, improvement of transportation efficiency, and improvement of amenity. In this system, by a multiple accessing scheme such as OFDMA (Orthogonal Frequency Division Multiple Access) and TDMA (Time Division Multiple Access), coexistence is about to be realized of: road-vehicle communication executed between a wireless base station apparatus (for example, a roadside apparatus) that governs vehicles and roads, and an on-vehicle apparatus installed in a vehicle; and inter-vehicle communication executed among a plurality of on-vehicle apparatuses.

An example of a system that has such road-vehicle communication and inter-vehicle communication coexisting with each other can employ the known technique of allocating a frequency that is different from the frequency that a wireless base station apparatus uses for inter-vehicle communication in an area that allows road-vehicle communication (Japanese Patent Application Laid-open No. 2000-201103). Road-vehicle communication through which a wireless base station apparatus receives traffic congestion information from a vehicle that encounters traffic congestion and through which the apparatus transmits the traffic congestion information to other vehicles, and inter-vehicle communication through which a vehicle having received traffic congestion information transmits the traffic congestion information to following vehicles, are disclosed (Japanese Patent Application Laid-open No. 2006-259861).

However, in the previously-proposed system that has such road-vehicle communication and inter-vehicle communication coexisting with each other, a problem has arisen that the efficiency of use of wireless resources such as frequencies and time periods allocated to each type of communication is low in an area that allows the road-vehicle communication.

That is, for example, in the case where wireless resources are allocated to road-vehicle and inter-vehicle communication by OFDMA, when any wireless resources allocated are not used, they are wasted and, therefore, overall efficiency of the use of wireless resources is lowered.

As the above Japanese Patent Application Laid-open No. 2000-201103 describes, in the case where different frequencies are allocated respectively to road-vehicle communication and inter-vehicle communication, when a time period during which the allocated frequency is not used becomes long even for at least one of those types of communication, the allocation of the frequency during the time period during which the frequency is not used is wasted and the efficiency of use of the frequency allocated is lowered.

In the above Japanese Patent Application Laid-open No. 2006-259861, similarly, in the case where road-vehicle communication and inter-vehicle communication are caused to coexist and wireless resources are allocated to both of them, unused resources are wasted and the efficiency of use of wireless resources is lowered.

WO 2008/015414A1 discloses a method of allocating channels to the various hops or connections between wireless devices of one or more multi-hop connection branches. A connection branch is allocated to each node within direct connection range of a base station, each connection branch capable of supporting connections to nodes beyond the direct connection range of the base station. A channel set is allocated to each connection branch, each set comprising a sequence of channels corresponding to the sequence of connection hops within the connection branch. The nodes of each connection branch are informed of their respective allocated channel set, each node using one of the channels to connect to another node.

US 2005/254449 A1 discloses a method of allocating resources among user stations in a self-organizing network, using a central entity, e.g. wireless access point. The central entity allocates the resources on a multiple basis in situations where direct communications between two or more user stations, using the same resources, meets certain quality requirements.

According to an aspect of the present invention there is provided a wireless resource allocating apparatus comprising: a receiving unit arranged to receive a signal that indicates that an on-vehicle apparatus loaded on a vehicle is present within a predetermined area; a calculating unit arranged to calculate the number of the on-vehicle apparatuses present within the predetermined area from the signal received by the receiving unit; a determining unit arranged to determine a ratio of wireless resources to be used for inter-vehicle communication between the on-vehicle apparatuses present within the predetermined area and road-vehicle communication between the on-vehicle apparatus and a roadside apparatus by retrieving the ratio using the number of the on-vehicle apparatuses calculated by the calculating unit as a key from a storage which stores the number in association with the ratio; an allocating unit arranged to allocate the wireless resources to be used for the inter-vehicle communication and the road-vehicle communication based on the ratio determined by the determining unit; and an instructing unit arranged to instruct the on-vehicle apparatus present within the predetermined area to use the wireless resources allocated by the allocating unit; wherein the allocating unit is arranged to allocate the wireless resources to only the road-vehicle communication when the number of the on-vehicle apparatuses present within the predetermined area is equal to or larger than a predetermined number that indicates a saturated state of the on-vehicle apparatuses present in the predetermined area.

According to another aspect of the present invention there is provided an on-vehicle apparatus comprising: a receiving unit arranged to receive an instruction of allocation of wireless resources to be used for execution of inter-vehicle communication between on-vehicle apparatuses each loaded on a vehicle present within a predetermined area and road-vehicle communication between the on-vehicle apparatuses and a communicating apparatus other than the on-vehicle apparatuses, the allocation of wireless resources being determined by a wireless resource allocating unit receiving a signal that indicates that the on-vehicle apparatus loaded on a vehicle is present within a predetermined area, calculating the number of the on-vehicle apparatuses present within the predetermined area from the received signal, determining a ratio of wireless resources to be used for inter-vehicle communication between the on-vehicle apparatuses present within the predetermined area and road-vehicle communication between the on-vehicle apparatus and a roadside apparatus by retrieving the ratio using the calculated number of the on-vehicle apparatuses as a key from a storage which stores the number in association with the ratio, and allocating the wireless resources to be used for the inter-vehicle communication and the road-vehicle communication based on the determined ratio; and a communicating unit responsive to the instruction received by the receiving unit to execute the inter-vehicle communication using the wireless resources allocated to the inter-vehicle communication and that executes the road-vehicle communication using the wireless resources allocated to the road-vehicle communication; wherein the wireless resources are allocated to only the road-vehicle communication when the number of the on-vehicle apparatuses present within the predetermined area is equal to or larger than a predetermined number that indicates a saturated state of the on-vehicle apparatuses present in the predetermined area.

Additional features and advantages of the invention (embodiment) will be set forth in part in the description which follows, and in part will be obvious from the description, or may be learned by practice of the invention.

It is to be understood that both the foregoing general description and the following detailed description are exemplary and explanatory only and are not restrictive of the invention, as claimed.

Reference is made, by way of example only, to the accompanying drawings in which:
Fig. 1 is a diagram of the overview of a wireless resource allocating system according to an embodiment;
Fig. 2 is a functional block diagram of the configuration of a wireless resource allocating apparatus according to the embodiment;
Fig. 3 is a diagram of an example of the data structure of a road-vehicle and inter-vehicle allocation table according to the embodiment;
Fig. 4 is a functional block diagram of the configuration of an on-vehicle apparatus according to the embodiment;
Fig. 5 is a diagram of an example of the frame configuration representing allocation of the wireless resources;
Fig. 6 is a diagram of an example of the road-vehicle and inter-vehicle frame (time division) configuration;
Fig. 7 is a diagram of an example of the road-vehicle and inter-vehicle frame (frame allocation) configuration;
Fig. 8 is a diagram of an example of the road-vehicle and inter-vehicle frame (time division and frequency division) configuration;
Fig. 9 is a sequence diagram of the overview of processes of the wireless resource allocating system according to the embodiment; and
Fig. 10 is a sequence diagram of the overview of other processes of the wireless resource allocating system according to the embodiment.

An embodiment of a wireless resource allocating apparatus, an on-vehicle apparatus, a wireless resource allocating system, and a wireless resource allocating method will be described in detail referring to the accompanying drawings. The present invention is not limited by the embodiment.

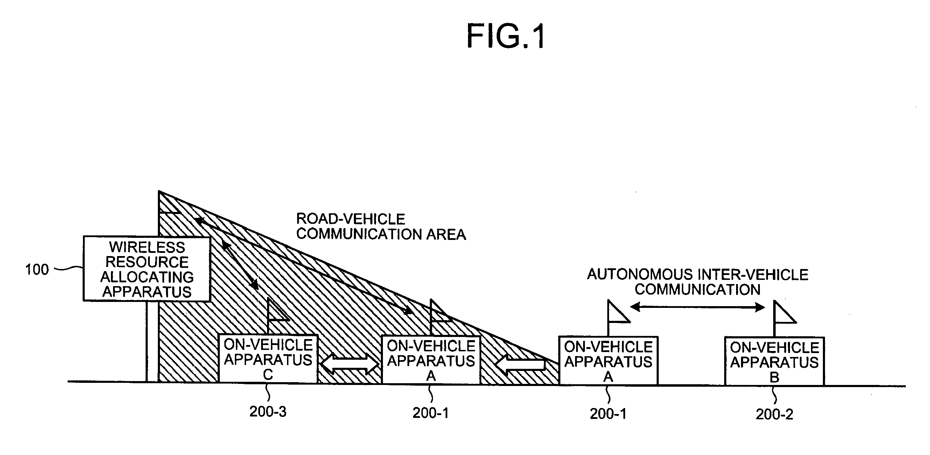

Fig. 1 is a diagram of the overview of a wireless resource allocating system according to the embodiment. As depicted in Fig. 1, in the wireless resource allocating system, a wireless resource allocating apparatus 100 allocates wireless resources that are used for road-vehicle communication with an on-vehicle apparatus A200-1 in an area that allows the communication and inter-vehicle communication between the on-vehicle apparatus A200-1 and another on-vehicle apparatus C200-3. However, road-vehicle communication may also be communication between the on-vehicle apparatus A200-1 and a communicating apparatus other than the wireless resource allocating apparatus 100.

The on-vehicle apparatus A200-1 in the wireless resource allocating system communicates with the wireless resource allocating apparatus 100 and the on-vehicle apparatus C200-3 in the area within which the wireless resource allocating apparatus 100 can communicate, using the wireless resources allocated by the wireless resource allocating apparatus 100. The area within which the wireless resource allocating apparatus 100 is able to communicate is, for example, within an area of several tens of meters in the DSRC communication scheme and, in the embodiment, the area within which an apparatus is able to communicate is referred to as "road-vehicle communication area".

The wireless resource allocating apparatus 100 is disposed on a road and allocates wireless resources that are used for the road-vehicle communication with on-vehicle apparatuses present in the road-vehicle communication area and the inter-vehicle communication among the on-vehicle apparatuses present in the road-vehicle communication area, based on the number of the on-vehicle apparatuses present in the road-vehicle communication area. More specifically, when the on-vehicle apparatus A200-1 enters the road-vehicle communication area, the wireless resource allocating apparatus 100 receives a signal that indicates that the on-vehicle apparatus A200-1 is present in the road-vehicle communication area. The wireless resource allocating apparatus 100 judges the number of on-vehicle apparatuses present in the current road-vehicle communication area from the received signal, the wireless resource allocating apparatus 100 determines allocations of the wireless resources to be used for road-vehicle communication and inter-vehicle communication in the area based on the judged number of the on-vehicle apparatuses, and the apparatus 100 allocates the wireless resources according to the determined allocations. In this case, the wireless resource allocating apparatus 100 allocates the wireless resources by distributing a plurality of time slots in a frame representing a communication unit time period according to the determined allocations to road-vehicle communication and inter-vehicle communication. The wireless resource allocating apparatus 100 transmits information on the allocated wireless resources to the on-vehicle apparatus A200-1 in the road-vehicle communication area. Hereinafter, all time slots distributed to the road-vehicle communication in the frame are collectively referred to as "road-vehicle region" and all time slots distributed to the inter-vehicle communication is collectively referred to as "inter-vehicle region".

The on-vehicle apparatus A200-1 is installed in a vehicle and, outside the road-vehicle communication area, the apparatus A200-1 executes autonomous inter-vehicle communications that are independent from other communications with an on-vehicle apparatus B200-2 present outside the road-vehicle communication area. Inside the road-vehicle communication area, the on-vehicle apparatus A200-1: stops the autonomous inter-vehicle communication; receives the information on the allocated wireless resources; judges the road-vehicle region and the inter-vehicle region from the allocated wireless resources; executes the road-vehicle communication using the road-vehicle region; and executes the inter-vehicle communication using the inter-vehicle region.

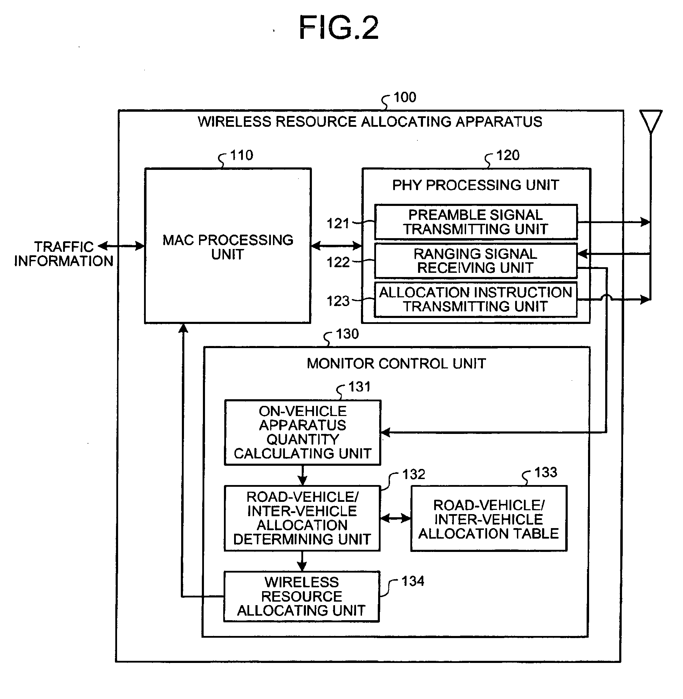

Fig. 2 is a functional block diagram of the configuration of the wireless resource allocating apparatus 100 according to the embodiment. As depicted in Fig. 2, the wireless resource allocating apparatus 100 includes an MAC processing unit 110, a PHY processing unit 120, and a monitor control unit 130. Though either of the OFDMA scheme and the TDMA scheme may be employed for the communication system, the case where the OFDMA scheme is employed will be described in the embodiment.

The MAC processing unit 110 has an MAC (Media Access Control) layer function of executing encoding and error correction of communication data such as, for example, road information received from a sensor external to the wireless resource allocating apparatus 100.

The PHY processing unit 120 is a processing unit that determines a physical connection and transmission schemes to communicate with the on-vehicle apparatuses and the PHY processing unit 120 has a transmission function and a reception function. The PHY processing unit 120 includes, as processing units corresponding to the transmission function, a preamble signal transmitting unit 121 and an allocation instruction transmitting unit 123 and, as a processing unit corresponding to the reception function, a ranging signal receiving unit 122.

The preamble signal transmitting unit 121 transmits a preamble signal by superposing the signal on a frame to start communication with an on-vehicle apparatus that is approaching the road-vehicle communication area. A preamble signal is always superposed at the head of communication data defined by the OFDMA scheme.

The allocation instruction transmitting unit 123 transmits to an on-vehicle apparatus an instruction of allocation of the wireless resources to be used when the road-vehicle communication and the inter-vehicle communication are executed in the road-vehicle communication area. Details of the allocation of the wireless resources to be used for the road-vehicle communication and the inter-vehicle communication will be described later.

The ranging signal receiving unit 122 receives from an on-vehicle apparatus a ranging signal that notifies that the on-vehicle apparatus is present in the road-vehicle communication area and the ranging signal receiving unit 122 notifies an on-vehicle apparatus quantity calculating unit 131 of the reception of the ranging signal.

The monitor control unit 130 monitors and controls various processes that are executed in the configuration of the wireless resource allocating apparatus 100. The monitor control unit 130 includes, as processing units that closely concern the embodiment, the on-vehicle apparatus quantity calculating unit 131, a road-vehicle/inter-vehicle allocation determining unit 132, a road-vehicle/inter-vehicle allocation table 133, and a wireless resources allocating unit 134.

The on-vehicle apparatus quantity calculating unit 131 calculates the number of on-vehicle apparatuses currently present within the road-vehicle communication area using the notice (notifications) by the ranging signal receiving unit 122. For example, the on-vehicle apparatus quantity calculating unit 131 determines the number of the on-vehicle apparatuses present within the road-vehicle communication area by summing up the number of notices from the ranging signal receiving unit 122 received within a predetermined time period until the present. The on-vehicle apparatus quantity calculating unit 131 may determine the number of responses to inquiry information regularly transmitted from the PHY processing unit 120 as the number of the on-vehicle apparatuses present within the road-vehicle communication area to check whether the on-vehicle apparatuses that have been allocated wireless resources in the past are also currently present in the road-vehicle communication area. However, when the ranging signals received by the ranging signal receiving unit 122 are transmitted from one same on-vehicle apparatus, the on-vehicle apparatus quantity calculating unit 131 does not sum up these signals doubly.

The road-vehicle/inter-vehicle allocation determining unit 132 determines the allocation of the wireless resources to execute the road-vehicle communication with the on-vehicle apparatuses present within the road-vehicle communication area and the inter-vehicle communication among the on-vehicle apparatuses present within the road-vehicle communication area from the number of the on-vehicle apparatuses calculated by the on-vehicle apparatus quantity calculating unit 131. More specifically, the road-vehicle/inter-vehicle allocation determining unit 132 retrieves the allocation of the wireless resources for the road-vehicle communication and the inter-vehicle communication from the road-vehicle/inter-vehicle allocation table 133 using the number of the on-vehicle apparatuses calculated by the on-vehicle apparatus quantity calculating unit 131 as a key.

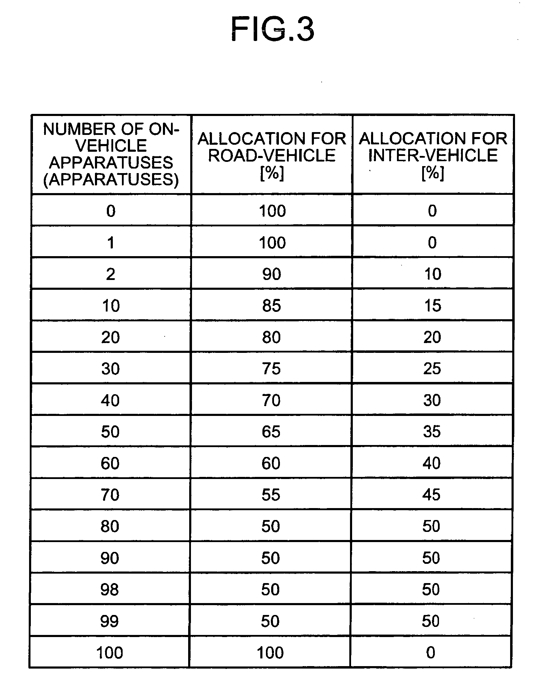

The road-vehicle/inter-vehicle allocation table 133 stores ratios of the wireless resources to be allocated to the road-vehicle communication and the inter-vehicle communication in correlation with the number of on-vehicle apparatuses present within the road-vehicle communication area. The data structure of the road-vehicle/inter-vehicle allocation table 133 according to the embodiment will be described referring to Fig. 3. As depicted in Fig. 3, the road-vehicle/inter-vehicle allocation table 133 holds the number of on-vehicle apparatuses (apparatuses), the road-vehicle allocation representing the allocation of the wireless resources to be used for the road-vehicle communication (%), and the inter-vehicle allocation representing the allocation of the wireless resources to be used for the inter-vehicle communication (%). An example of the road-vehicle allocation and the inter-vehicle allocation of the wireless resources will be depicted.

The road-vehicle/inter-vehicle allocation table 133 stores an allocation such that the road-vehicle allocation is 100% and the inter-vehicle allocation is 0% when the number of on-vehicle apparatuses present within the road-vehicle communication area is zero or one. Therefore, when the number of on-vehicle apparatuses present within the road-vehicle communication area is zero or one, no wireless resource is allocated to the inter-vehicle communication, and allocation of the wireless resources to be wasted is reduced.

The inter-vehicle allocation in the case where the number of on-vehicle apparatuses present within the road-vehicle communication area is two or more and 99 or fewer increases from 10% to 50% as the number of on-vehicle apparatuses increases. The road-vehicle allocation in this case decreases from 90% to 50% as the number of on-vehicle apparatuses increases. The road-vehicle allocation in the case where the number of on-vehicle apparatuses present within the road-vehicle communication area is 100 or more that (in this example) indicates the saturated state is 100% and the inter-vehicle allocation in this case is 0%. This is because congestion occurs in the road-vehicle communication area when the number of on-vehicle apparatuses present within the road-vehicle communication area is saturated. That is, within the road-vehicle communication area, the on-vehicle apparatuses are not movable and the need for the inter-vehicle communication is weak and, therefore, the wireless resource allocating apparatus 100 is able to reduce the allocation of the wireless resources to be wasted by allocating all the wireless resources to the road-vehicle communication. The allocation for the road-vehicle communication and the allocation for the inter-vehicle communication of the wireless resources being correlated with the number of on-vehicle apparatuses are not limited to the above figures. The road-vehicle/inter-vehicle allocation table 133 may retain the absolute amounts of the wireless resources instead of the ratios, such as the road-vehicle allocation, the inter-vehicle allocation, and actual allocation.

Returning to Fig. 2, the wireless resource allocating unit 134 allocates the wireless resources to be used for road-vehicle communication and inter-vehicle communication by applying to them the allocation of the wireless resources to be used for the road-vehicle communication and the inter-vehicle communication determined by the road-vehicle/inter-vehicle allocation determining unit 132. More specifically, the wireless resource allocating unit 134 distributes the time slots in the frame according to the allocations of the wireless resources to be used for the road-vehicle communication and the inter-vehicle communication determined by the road-vehicle/inter-vehicle allocation determining unit 132 and, thereby, the wireless resource allocating unit 134 allocates the wireless resources to be used for the road-vehicle communication and the inter-vehicle communication. The wireless resource allocating unit 134 may allocate the wireless resources to be used for the road-vehicle communication and the inter-vehicle communication by distributing a plurality of frames in a series of frames according to the allocation of the wireless resources to be used for the road-vehicle communication and the inter-vehicle communication. The wireless resource allocating unit 134 may allocate the wireless resources to be used for the road-vehicle communication and the inter-vehicle communication by dividing the frequency band that is useable within the road-vehicle communication area according to the allocation of the wireless resources to be used for the road-vehicle communication and the inter-vehicle communication.

Thereby, the wireless resource allocating apparatus 100 reduces the allocation of the wireless resources for inter-vehicle communication when the number of on-vehicle apparatuses present within the road-vehicle communication area is small, and the wireless resource allocating apparatus 100 increases the allocation of the wireless resources for inter-vehicle communication when the number of on-vehicle apparatuses is large. Thereby, the wireless resource allocating apparatus 100 is able to cause the inter-vehicle communication and the road-vehicle communication to be executed according to the number of on-vehicle apparatuses and the wireless resource allocating apparatus 100 is able to increase the efficiency of use of the wireless resources to be used for the inter-vehicle communication and the road-vehicle communication. The wireless resource allocating apparatus 100 allocates the wireless resources to be used for inter-vehicle communication and road-vehicle communication within the road-vehicle communication area and, thereby, the inter-vehicle communication and the road-vehicle communication are executed each using different wireless resources within the road-vehicle communication area and, therefore, interference between the inter-vehicle communication and the road-vehicle communication is able to be prevented.

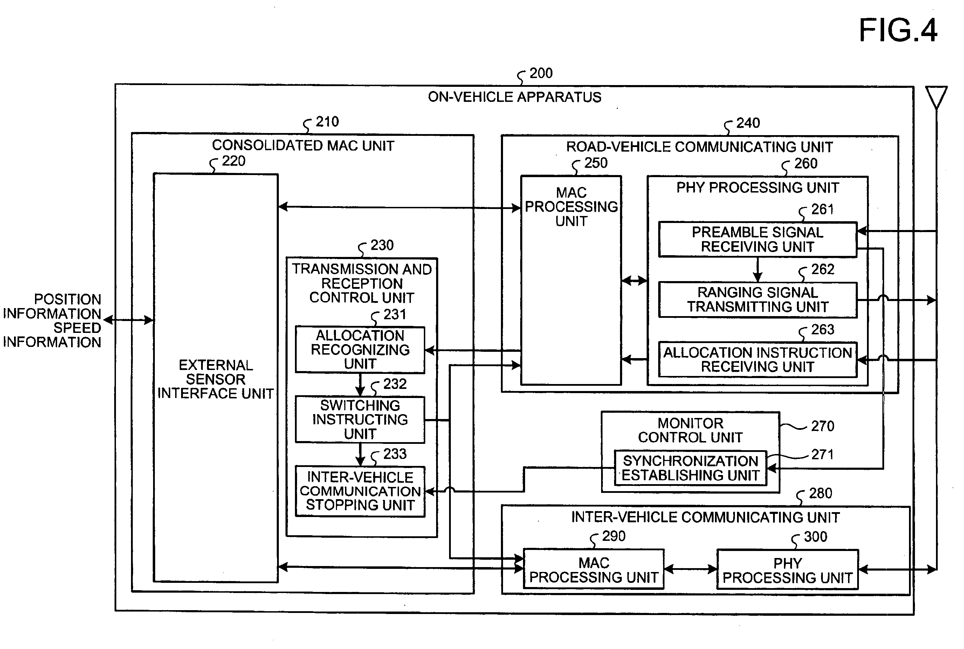

Fig. 4 is a functional block diagram of the configuration of an on-vehicle apparatus according to the embodiment. As depicted in Fig. 4, an on-vehicle apparatus 200 includes: a consolidated MAC unit 210 that includes an external sensor interface unit 220 and a transmission and reception control unit 230; a road-vehicle communicating unit 240 that includes an MAC processing unit 250 and a PHY processing unit 260; a monitor control unit 270 that includes a synchronization establishing unit 271; and an inter-vehicle communicating unit 280 that includes an MAC processing unit 290 and a PHY processing unit 300. In this case, the on-vehicle apparatus 200 executes the inter-vehicle communication and the road-vehicle communication according to the instruction of the allocation of the wireless resources to be used for executing the road-vehicle communication and the inter-vehicle communication within the road-vehicle communication area transmitted from the wireless resource allocating apparatus 100. Therefore, the on-vehicle apparatus 200 executes the inter-vehicle communication and stops the road-vehicle communication when the wireless resources are in the inter-vehicle region, and executes the road-vehicle communication and stops the inter-vehicle communication when the wireless resources are in the road-vehicle region.

The external sensor interface unit 220 receives, for example, speed information, and vehicle information from the exterior of the on-vehicle apparatus and the external sensor interface unit 220 notifies the MAC processing unit 250 of the road-vehicle communicating unit 240 or the MAC processing unit 290 of the inter-vehicle communicating unit 280 of these pieces of information. When the external sensor interface unit 220 is notified of the information that is transmitted from the wireless resource allocating apparatus 100 and other on-vehicle apparatuses, from the MAC processing units (250 and 290), the external sensor interface unit 220 transmits the information to exterior of the on-vehicle apparatus.

The transmission and reception control unit 230 includes an allocation recognizing unit 231, a switching instructing unit 232, and an inter-vehicle communication stopping unit 233. The allocation recognizing unit 231 obtains from the MAC processing unit 250 the allocation instruction of the wireless resources to be used for the road-vehicle communication and the inter-vehicle communication within the road-vehicle communication area and the allocation recognizing unit 231 recognizes the allocation of the wireless resources to be used for the road-vehicle communication and the inter-vehicle communication within the road-vehicle communication area. That is, the allocation recognizing unit 231 recognizes the road-vehicle region to be used for the road-vehicle communication and the inter-vehicle region to be used for the inter-vehicle communication based on the instruction of the allocation of the wireless resources to be used for the road-vehicle communication and the inter-vehicle communication.

The switching instructing unit 232 switches between the road-vehicle communication and the inter-vehicle communication according to the road-vehicle region and the inter-vehicle region of the wireless resources recognized by the allocation recognizing unit 231. More specifically, for example, the switching instructing unit 232 notifies the MAC processing unit 290 of the inter-vehicle communicating unit 280 of the stop of the transmission to the on-vehicle apparatus when a starting timing of the road-vehicle region arrives, and the switching instructing unit 232 notifies the MAC processing unit 250 of the road-vehicle communicating unit 240 of the cancellation of the stop of the transmission to the wireless resource allocating apparatus 100. Thereby, the on-vehicle apparatus 200 is able to execute the road-vehicle communication in the road-vehicle region to which the wireless resources are allocated. On the other hand, the switching instructing unit 232 notifies the MAC processing unit 250 of the road-vehicle communicating unit 240 of the stop of the transmission to the wireless resources allocating apparatus 100 when a starting timing of the inter-vehicle region arrives, and the switching instructing unit 232 notifies the MAC processing unit 290 of the inter-vehicle communicating unit 280 of the cancellation of the stop of the transmission to the on-vehicle apparatus. Thereby, the on-vehicle apparatus 200 is able to execute the inter-vehicle communication in the inter-vehicle region to which the wireless resources are allocated.

When the switching instructing unit 232 obtains an instruction instructing to stop the inter-vehicle communication from the inter-vehicle communication stopping unit 233, the switching instructing unit 232 notifies the MAC processing unit 290 of the inter-vehicle communicating unit 280 of the stop of the transmission to the on-vehicle apparatus.

When the inter-vehicle communication stopping unit 233 obtains an instruction instructing to stop the inter-vehicle communication from the synchronization establishing unit 271, the inter-vehicle communication stopping unit 233 instructs the switching instructing unit 232 to stop inter-vehicle communication.

The MAC processing unit 250 of the road-vehicle communicating unit 240 has the MAC layer function of executing encoding, error correction, etc., of road-vehicle communication data.

The PHY processing unit 260 of the road-vehicle communicating unit 240 is a processing unit that determines a physical connection and transmission schemes to communicate with the wireless resource allocating apparatus 100 and the PHY processing unit 260 has a transmission function and a reception function.

The PHY processing unit 260 of the road-vehicle communicating unit 240 includes, as processing units corresponding to the reception function, a preamble signal receiving unit 261 and an allocation instruction receiving unit 263 and, as a processing unit corresponding to the transmitting function, a ranging signal transmitting unit 262.

The preamble signal receiving unit 261 receives the preamble signal superposed at the head of the frame transmitted from the wireless resources allocating apparatus 100 when the on-vehicle apparatus 200 enters the road-vehicle communication area. The preamble signal receiving unit 261 notifies the ranging signal transmitting unit 262 of the reception of the preamble signal.

The allocation instruction receiving unit 263 receives an instruction of the allocation of the wireless resources to be used for execution of the road-vehicle communication and the inter-vehicle communication within the road-vehicle communication area transmitted from the wireless resource allocating apparatus 100.

The ranging signal transmitting unit 262 transmits to the wireless resource allocating apparatus 100 a ranging signal that notifies that the on-vehicle apparatus 200 is present within the road-vehicle communication area when the ranging signal transmitting unit 262 is notified from the preamble signal receiving unit 261 of the reception of the preamble signal.

The monitor control unit 270 monitors and controls various processes that are executed in the on-vehicle apparatus 200. The monitor control unit 270 includes the synchronization establishing unit 271 as a processing unit that closely concerns the embodiment. The synchronization establishing unit 271 establishes synchronization with the wireless resource allocating apparatus 100 using the preamble signal received by the preamble signal receiving unit 261. In this case, the synchronization establishing unit 271 instructs the inter-vehicle communication stopping unit 233 to stop inter-vehicle communication. That is, the synchronization establishing unit 271 instructs the inter-vehicle communication stopping unit 233 to stop inter-vehicle communication executed outside the road-vehicle communication area, for the on-vehicle apparatus 200 that is approaching the road-vehicle communication area to execute road-vehicle communication and inter-vehicle communication according to the allocation of the wireless resources instructed from the wireless resource allocating apparatus 100.

The MAC processing unit 290 of the inter-vehicle communicating unit 280 has the MAC layer function of executing encoding, error correction, etc., of the inter-vehicle communication data.

The PHY processing unit 300 of the inter-vehicle communicating unit 280 is a processing unit that determines the physical connection and transmission schemes to communicate with other on-vehicle apparatuses, and the PHY processing unit 300 has a transmission function and a reception function.

In this manner, when the on-vehicle apparatus 200 receives the instruction of the allocation of the wireless resources to be used for execution of inter-vehicle communication and road-vehicle communication to be used within the road-vehicle communication area, the on-vehicle apparatus 200 executes inter-vehicle communication and road-vehicle communication according to the wireless resources received. Thereby, no interference occurs between inter-vehicle communication and road-vehicle communication and, therefore, normal (reliable) information is able to be received.

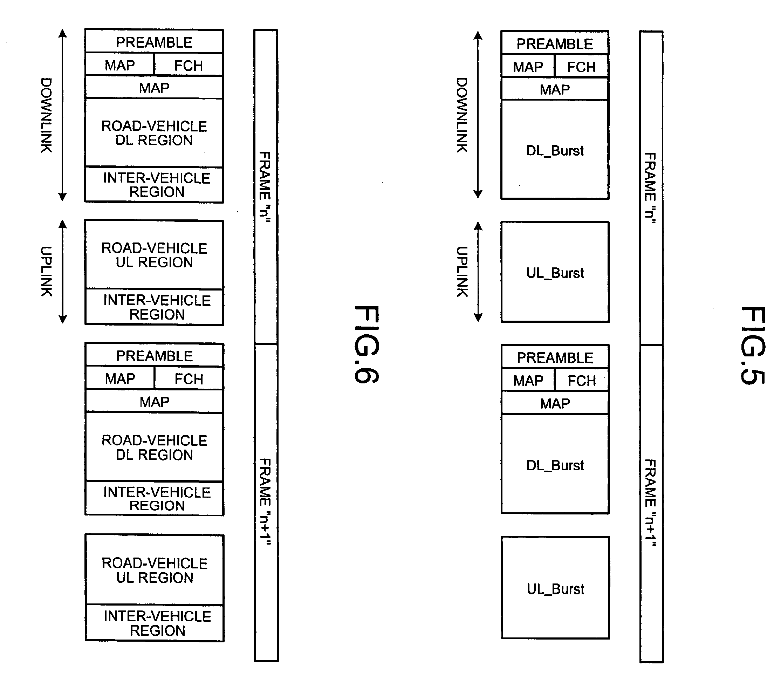

An example of the ordinary allocation of the wireless resource will be described referring to Fig. 5. Fig. 5 is a diagram of an example of the frame configuration representing the allocation of the wireless resources. As depicted in Fig. 5, a frame is configured by dividing the frame into a plurality of time slots. One frame includes a preamble, an FCH, uplink and downlink line allocation information (MAP), a downlink burst (DL_Burst) including transmission data for the downlink line, and an uplink burst (UL_Burst) including transmission data for the uplink line. The uplink and downlink line allocation information (MAP) includes uplink line allocation information and downlink line allocation information. The uplink line allocation information is an index of the uplink burst (UL_Burst) and indicates the starting timing of the uplink burst to be transmitted from the on-vehicle apparatus 200 to the wireless resource allocating apparatus 100. The downlink line allocation information is an index of the downlink burst (DL_Burst) and indicates the starting timing of the downlink burst to be transmitted from the wireless resource allocating apparatus 100 to the on-vehicle apparatus 200.

However, in the case where such fixed allocation of the wireless resources is employed, when the allocated time slots are not used, the wireless resources not used are wasted and the efficiency of use of the wireless resources allocated is lowered.

Therefore, in the embodiment, the wireless resources to be used for the inter-vehicle communication and the road-vehicle communication are variably allocated. Allocation of the wireless resources to be used for the road-vehicle communication and the inter-vehicle communication according to the embodiment will be described referring to Figs. 6 to 8.

Fig. 6 is a diagram of the frame configuration that allocates a plurality of time slots in one same frame by dividing them into those for the road-vehicle communication and the inter-vehicle communication. One frame includes the preamble, an FCH, uplink and downlink line allocation information (MAP), a down burst (road-vehicle DL region) including transmission data of the downlink line of the road-vehicle communication, a down burst (inter-vehicle region) including transmission data of the inter-vehicle communication, an up burst (road-vehicle UL region) including transmission data of the uplink line of the road-vehicle communication, and an up burst (inter-vehicle region) including transmission data of the inter-vehicle communication. The uplink and downlink line allocation information (MAP) is indexes of the downlink burst (road-vehicle DL region and inter-vehicle region) and the uplink burst (road-vehicle UL region and inter-vehicle region) and the information indicates the starting position of each of the downlink bursts and each of the uplink bursts.

The allocation of the road-vehicle region (the road-vehicle DL region and the road-vehicle UL region) to be used for the road-vehicle communication and the inter-vehicle region to be used for the inter-vehicle communication in one frame is executed by the wireless resource allocating apparatus 100 based on the number of on-vehicle apparatuses present within the road-vehicle communication area. For example, the inter-vehicle region and the road-vehicle region are allocated based on the allocation of the inter-vehicle region and the road-vehicle region determined by the number of on-vehicle apparatuses present within the road-vehicle communication area. The inter-vehicle region is further divided and is allocated to each inter-vehicle communication among the on-vehicle apparatuses. The wireless resource allocating apparatus 100 may execute the above division and allocation or the on-vehicle apparatus may execute it.

In this manner, the wireless resource allocating apparatus 100 allocates the time slots in the frame to inter-vehicle communication and road-vehicle communication and, thereby, the inter-vehicle communication and the road-vehicle communication each use the same frequency during a different time period. Therefore, no interference occurs between the wireless signals of those types of communication and, therefore, a receiving on-vehicle apparatus is able to receive information reliably.

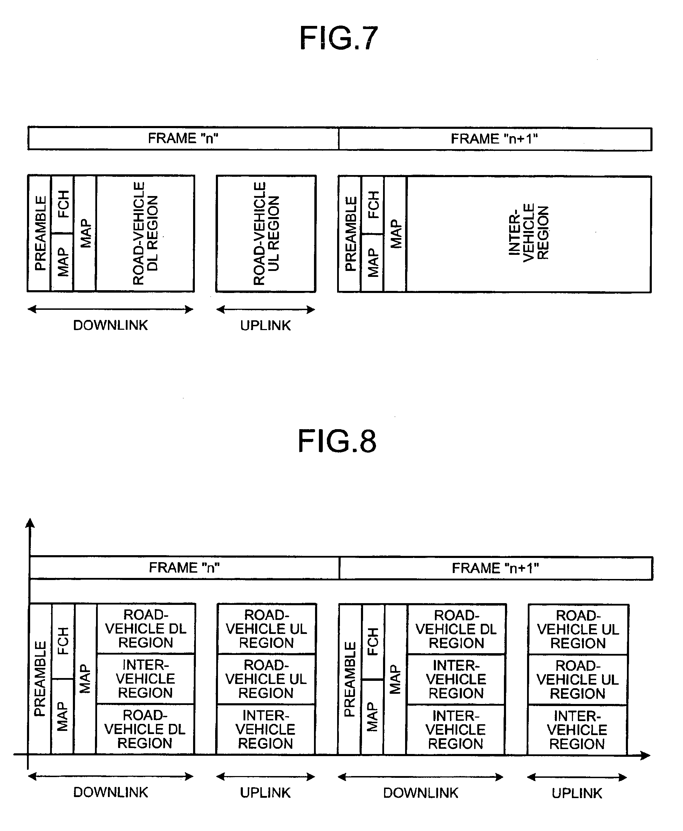

Fig. 7 is a diagram of the frame configuration that allocates a plurality of frames to the road-vehicle communication and the inter-vehicle communication by distributing those frames in frames. That is, the frames allocated to the road-vehicle communication are different from the frames allocated to the inter-vehicle communication.

One frame (frame "n" in Fig. 7) has the frame configuration to execute the road-vehicle communication, and includes the preamble, an FCH, uplink and downlink line allocation information (MAP), a down burst (road-vehicle DL region) including transmission data of the downlink line of the road-vehicle communication, and an up burst (road-vehicle UL region) including transmission data of the uplink line of the road-vehicle communication. The uplink and downlink line allocation information (MAP) is indexes of the downlink burst (road-vehicle DL region) and the uplink burst (road-vehicle UL region) and the information indicates the starting position of each of the downlink burst and the uplink burst.

The next frame (frame "n+1" in Fig. 7) has the frame configuration to execute the inter-vehicle communication, and includes the preamble, an FCH, uplink and downlink line allocation information (MAP), and a inter-vehicle region including transmission data of the inter-vehicle communication. The uplink and downlink line allocation information (MAP) is an index of the inter-vehicle communication and the information indicates the starting position of the inter-vehicle region. The inter-vehicle region is further divided and allocated to each inter-vehicle communication between the on-vehicle apparatuses. The wireless resource allocating apparatus 100 may execute the above division and allocation or the on-vehicle apparatus may do this.

The wireless resource allocating apparatus 100 executes the distribution of frames to execute the road-vehicle communication and the frames to execute the inter-vehicle communication based on the number of on-vehicle apparatuses present within the road-vehicle communication area. For example, the numbers of frames are allocated based on the number of on-vehicle apparatuses present within the road-vehicle communication area. It is assumed that which one of the road-vehicle communication and the inter-vehicle communication one frame is allocated to is distinguishable according to the index of the frame included in the uplink and downlink line allocation information (MAP) of the frame.

In this manner, the wireless resource allocating apparatus 100 distributes the plurality of frames in frames to the road-vehicle communication and the inter-vehicle communication in frames and, thereby, the road-vehicle communication and the inter-vehicle communication each use frames in a different time period. Therefore, no interference occurs between the wireless signals of those types of communication and, therefore, a receiving on-vehicle apparatus is able to receive the normal information.

Fig. 8 is a diagram of the frame configuration that allocates a plurality of time slots in one same frame to the road-vehicle communication and the inter-vehicle communication and that allocates frequencies in a frequency band usable within the road-vehicle communication area by dividing the frequencies. As depicted in Fig. 8, the frame is configured to allocate the frequency band usable within the road-vehicle communication to combinations of the road-vehicle communication and the inter-vehicle communication by dividing the band and is further configured to allocate the plurality of time slots to the road-vehicle communication and the inter-vehicle communication in each combination by distributing the slots. In this case, a combination refers to, for example, a combination of the road-vehicle DL region and the road-vehicle UL region, a combination of the inter-vehicle region and the road-vehicle UL region, a combination of the road-vehicle DL region and the inter-vehicle region, and a combination of the inter-vehicle region and the inter-vehicle region. However the combinations are not limited to the above.

The allocation of the plurality of time slots executed to the road-vehicle communication and the inter-vehicle communication in each combination is executed by the wireless resource allocating apparatus 100 based on the number of the on-vehicle apparatuses present within the road-vehicle communication area. For example, the inter-vehicle region and the road-vehicle region are allocated based on the allocation of the inter-vehicle region and the road-vehicle region determined according to the number of the on-vehicle apparatuses present within the road-vehicle communication area. The wireless resource allocating apparatus 100 executes the division of the frequency band useable within the road-vehicle communication area to each combination and this division may be executed based on the number of on-vehicle apparatuses present within the road-vehicle communication area or may be evenly dividing.

In this manner, the wireless resource allocating apparatus 100 allocates the plurality of time slots in the same frame to the road-vehicle communication and the inter-vehicle communication and allocates the frequencies of the frequency band usable within the road-vehicle communication area to the road-vehicle communication and the inter-vehicle communication by dividing the band. Thereby, the inter-vehicle communication and the road-vehicle communication each use different wireless resources. Therefore, no interference occurs between the wireless signals of those types of communication and, therefore, a receiving on-vehicle apparatus is able to receive the normal information.

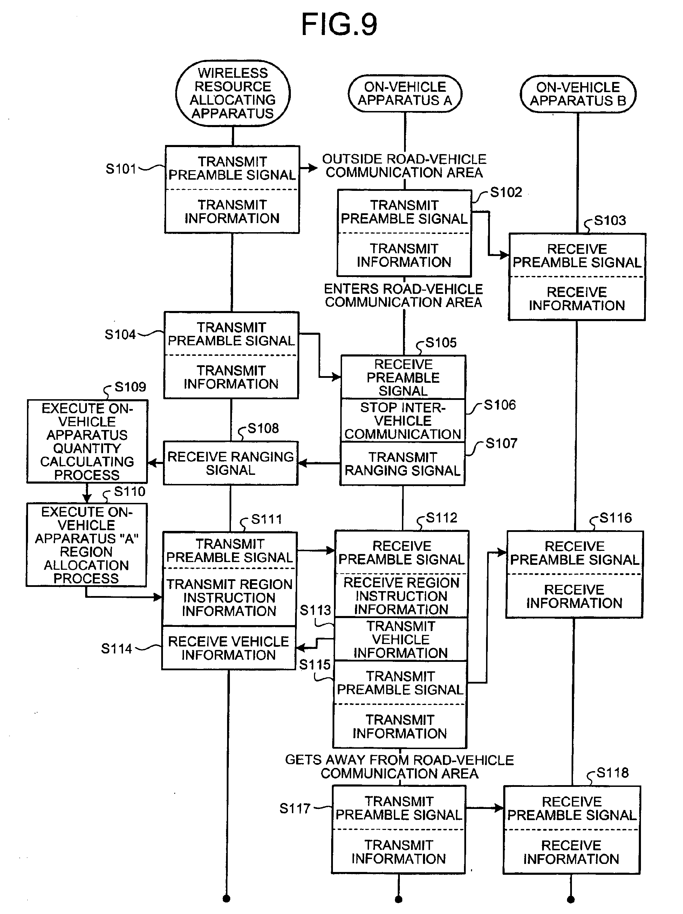

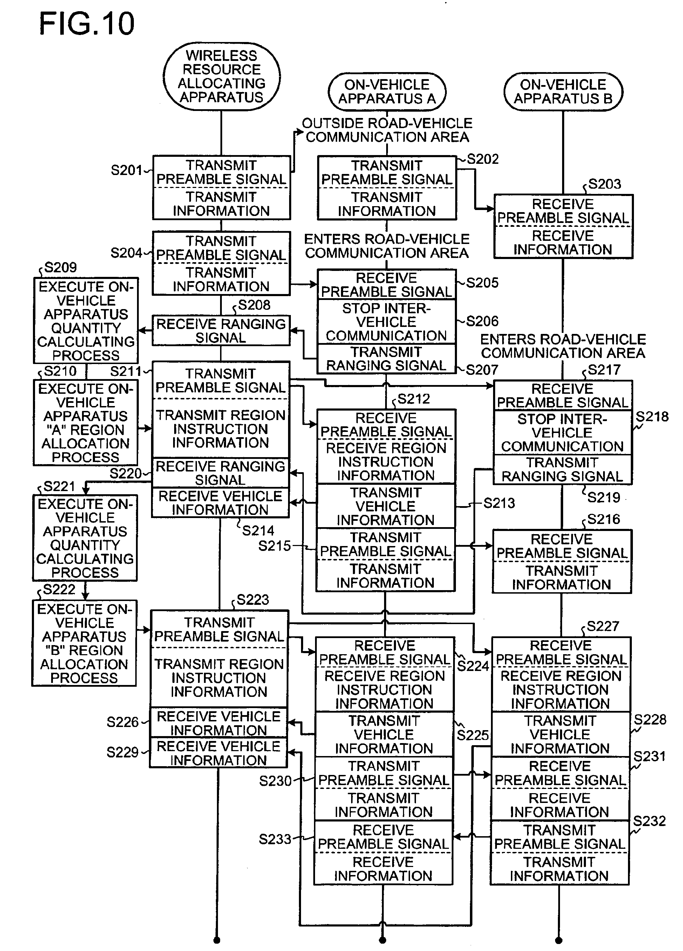

The overview of processes by the wireless resource allocating system according to the embodiment will be described referring to Figs. 9 and 10. Fig. 9 is a sequence diagram of the overview of the processes of the wireless resource allocating system executed when an on-vehicle apparatus "A" approaches the road-vehicle communication area. Concerning Figs. 9 and 10, the wireless resource allocating apparatus 100 executes the allocation of the wireless resources to be used for road-vehicle communication and inter-vehicle communication by distributing the plurality of timeslots in the frame.

The preamble signal transmitting unit 121 of the wireless resource allocating apparatus 100 transmits the preamble signal superposing the signal at the head of a frame (S101). However, when the on-vehicle apparatus A200-1 is outside the road-vehicle communication area, the on-vehicle apparatus A200-1 is not able to receive the preamble signal that the wireless resource allocating apparatus 100 transmits. In this case, to execute the autonomous inter-vehicle communication with the other on-vehicle apparatus B200-2, the on-vehicle apparatus A200-1, for example, transmits a preamble signal that includes congestion information (S102). The on-vehicle apparatus B200-2 receives the preamble signal together with, for example, information on the traffic around the on-vehicle apparatus A200-1 (S103) and executes the autonomous inter-vehicle communication with the on-vehicle apparatus B200-2.

Thereafter, the preamble signal transmitting unit 121 of the wireless resource allocating apparatus 100 transmits the preamble signal superposing the preamble signal at the head of a frame (S104).

In this case, the on-vehicle apparatus A200-1 that enters the road-vehicle communication area receives the preamble signal transmitted by the wireless resource allocating apparatus 100 using the preamble signal receiving unit 261 (S105). After the synchronization establishing unit 271 establishes synchronization, the on-vehicle apparatus A200-1 stops the autonomous inter-vehicle communication with the on-vehicle apparatus B200-2, using the inter-vehicle communication stopping unit 233 (S106). Simultaneously, the ranging signal transmitting unit 262 transmits the ranging signal to the wireless resource allocating apparatus 100 (S107).

The ranging signal receiving unit 122 of the wireless resource allocating apparatus 100 receives the ranging signal (S108).

When the ranging signal receiving unit 122 receives the ranging signal, the on-vehicle apparatus quantity calculating unit 131 of the wireless resource allocating apparatus 100 calculates the number of on-vehicle apparatuses currently present within the road-vehicle communication area (S109). For example, the on-vehicle apparatus quantity calculating unit 131 sums up the numbers of ranging signals received within the predetermined time period until the present.

The wireless resource allocating unit 134 of the wireless resource allocating apparatus 100 executes a region allocation process of allocating the wireless resources to the road-vehicle region and the inter-vehicle region, to the on-vehicle apparatus A200-1 based on the number of on-vehicle apparatuses calculated by the on-vehicle apparatus quantity calculating unit 131 (S110).

The allocation instruction transmitting unit 123 of the wireless resource allocating apparatus 100 transmits instruction information that instruct to use the wireless resources allocated by the region allocating process of the wireless resource allocating unit 134, together with the preamble signal, to the on-vehicle apparatus A200-1 (S111).

The allocation instruction receiving unit 263 of the on-vehicle apparatus A200-1 receives the instruction information transmitted by the wireless resource allocating apparatus 100 (S112). The PHY processing unit 260 transmits to the wireless resource allocation apparatus 100 vehicle information on the on-vehicle apparatus A200-1 using the road-vehicle region and according to the instruction information received by the allocation instruction receiving unit 263 (S113). In this case, the on-vehicle apparatus A200-1 executes road-vehicle communication using the road-vehicle region and, therefore, the inter-vehicle communication between the on-vehicle apparatuses A200-1 and B200-2 is stopped and the on-vehicle apparatus A200-1 is not able to communicate with the on-vehicle apparatus B200-2.

The PHY processing unit 120 of the wireless resource allocating apparatus 100 receives the vehicle information transmitted by the on-vehicle apparatus A200-1 (S114).

On the other hand, the PHY processing unit 300 of the on-vehicle apparatus A200-1 transmits to the on-vehicle apparatus B200-2, for example, information on the traffic around the on-vehicle apparatus A200-1 together with the preamble signal, using the inter-vehicle region and according to the instruction information of the wireless resources received by the allocation instruction receiving unit 263 (S115). In this case, the wireless resources are in the inter-vehicle region and the road-vehicle communication between the wireless resource allocating apparatus 100 and the on-vehicle apparatus A200-1 is stopped and, therefore, the wireless resource allocating apparatus 100 is not able to communicate with the on-vehicle apparatus A200-1.

The PHY processing unit 300 of the on-vehicle apparatus B200-2 receives the traffic information together with the preamble signal transmitted by the on-vehicle apparatus A200-1 (S116).

Thereafter, when the on-vehicle apparatus A200-1 gets away from the road-vehicle communication area, the on-vehicle apparatus A200-1 transmits, for example, information on the traffic around the on-vehicle apparatus A200-1 together with the preamble signal (S117). The on-vehicle apparatus B200-2 receives the traffic information together with the preamble signal transmitted by the on-vehicle apparatus S200-1 (S118) and executes autonomous inter-vehicle communication with the on-vehicle apparatus A200-1.

Fig. 10 is a sequence diagram of the overview of processes of the wireless resource allocating system executed when the on-vehicle apparatuses A and B enter the road-vehicle communication area. The overview of processes for the on-vehicle apparatus A200-1 to execute road-vehicle communication with the wireless resource allocating apparatus 100 and inter-vehicle communication with the on-vehicle apparatus B200-2 (S201 to S216) are same as the overview of the processes of Fig. 9 (S101 to S116) and description therefor is omitted.

The on-vehicle apparatus A200-1 receives the instruction information instructing to use the wireless resources to which the inter-vehicle region and the road-vehicle region are allocated by the wireless resource allocating apparatus 100 (S212), executes the road-vehicle communication according to the instruction information (S213), and executes inter-vehicle communication (S215).

When the on-vehicle apparatus B200-2 enters the road-vehicle communication area, the preamble signal receiving unit 261 of the on-vehicle apparatus B200-2 receives the preamble signal transmitted by the wireless resource allocating apparatus 100 (S217). After the synchronization establishing unit 271 establishes synchronization, the on-vehicle apparatus B200-2 stops the autonomous inter-vehicle communication with another on-vehicle apparatus using the inter-vehicle communication stopping unit 233 (S218). Simultaneously, the ranging signal transmitting unit 262 transmits the ranging signal to the wireless resource allocating apparatus 100 (S219).

The ranging signal receiving unit 122 of the wireless resource allocating apparatus 100 receives the ranging signal (S220).

When the ranging signal receiving unit 122 receives the ranging signal, the on-vehicle apparatus quantity calculating unit 131 of the wireless resource allocating apparatus 100 calculates the number of on-vehicle apparatuses currently present within the road-vehicle communication area (S221). For example, the on-vehicle apparatus quantity calculating unit 131 sums up the numbers of ranging signals received within the predetermined time period until the present.

The wireless resource allocating unit 134 of the wireless resource allocating apparatus 100 executes a region allocation process of allocating the wireless resources to the road-vehicle region and the inter-vehicle region, to the on-vehicle apparatuses A200-1 and B200-2 based on the number of on-vehicle apparatuses calculated by the on-vehicle apparatus quantity calculating unit 131 (S222). For example, based on the number of on-vehicle apparatuses, the wireless resource allocating unit 134 allocates the road-vehicle region and the inter-vehicle region and, for each region, allocates regions for the on-vehicle apparatuses A200-1 and B200-2 to use.

The allocation instruction transmitting unit 123 of the wireless resource allocating apparatus 100 transmits instruction information that instruct to use the wireless resources allocated to the road-vehicle region and the inter-vehicle region by the region allocating process of the monitor control unit 130, together with the preamble signal, to the on-vehicle apparatuses A200-1 and B200-2 (S223).

The allocation instruction receiving unit 263 of each of the on-vehicle apparatuses A200-1 and B200-2 receives the instruction information transmitted by the wireless resource allocating apparatus 100 (S224, S227).

The PHY processing unit 260 of each of the on-vehicle apparatuses A200-1 and B200-2 transmits to the wireless resource allocation apparatus 100 vehicle information on the on-vehicle apparatus using the road-vehicle region of the apparatus and according to the instruction information received by the allocation instruction receiving unit 263 (S225 and S228). In this case, the on-vehicle apparatuses A200-1 and B200-2 execute road-vehicle communication using the road-vehicle region and, therefore, the inter-vehicle communication between the on-vehicle apparatuses A200-1 and B200-2 is stopped and the on-vehicle apparatuses A200-1 and B200-2 are not able to execute the inter-vehicle communication.

The PHY processing unit 120 of the wireless resource allocating apparatus 100 receives the pieces of vehicle information transmitted by the on-vehicle apparatuses A200-1 and B200-2 (S226 and S229).

On the other hand, the PHY processing unit 300 of the on-vehicle apparatus A200-1 transmits to the on-vehicle apparatus B200-2, for example, information on the traffic around the on-vehicle apparatus A200-1 together with the preamble signal, using the inter-vehicle region of the on-vehicle apparatus A200-1 and according to the instruction information of the wireless resources received by the allocation instruction receiving unit 263 (S230). The PHY processing unit 300 of the on-vehicle apparatus B200-2 receives the traffic information transmitted by the on-vehicle apparatus A200-1 (S231). The PHY processing unit 300 of the on-vehicle apparatus B200-2 transmits to the on-vehicle apparatus A200-1, for example, information on the traffic around the on-vehicle apparatus B200-2 together with the preamble signal, using the inter-vehicle region of the on-vehicle apparatus B200-2 and according to the instruction information of the wireless resources received by the allocation instruction receiving unit 263 (S232). The PHY processing unit 300 of the on-vehicle apparatus A200-1 receives the traffic information transmitted by the on-vehicle apparatus B200-2 (S233). In this case, the wireless resources are in the inter-vehicle region and the road-vehicle communication between the wireless resource allocating apparatus 100 and the on-vehicle apparatuses A200-1 and B200-2 is stopped and, therefore, the wireless resource allocating apparatus 100 is not able to communicate with the on-vehicle apparatuses A200-1 and B200-2.

As above, according to the embodiment, the wireless resource allocating apparatus 100: receives a signal indicating that the on-vehicle apparatus 200 is present within the road-vehicle communication area with which the wireless resource allocating apparatus 100 is able to communicate; calculates the number of on-vehicle apparatuses present within the road-vehicle communication area from the signal received; allocates the wireless resources to be used for the inter-vehicle communication among a plurality of on-vehicle apparatuses and the road-vehicle communication between on-vehicle apparatuses and the wireless resource allocating apparatus 100 other than the on-vehicle apparatuses in the road-vehicle communication area based on the number of on-vehicle apparatuses calculated; and instructs the on-vehicle apparatus 200 present within the road-vehicle communication area to use the allocated wireless resources.

In this manner, the wireless resource allocating apparatus 100 allocates the wireless resources to be used for the inter-vehicle communication and the road-vehicle communication based on the number of the on-vehicle apparatuses 200 present within the road-vehicle communication area. Therefore, in the case where the number of on-vehicle apparatuses present within a predetermined area is large, when allocation of the wireless resources to be used for the inter-vehicle communication is increased, each on-vehicle apparatus is able to securely execute the inter-vehicle communication using the wireless resources and, in the case where the number of on-vehicle apparatuses is small, when the allocation of the wireless resources to be used for the inter-vehicle communication is reduced, wasteful allocation of the wireless resources to the inter-vehicle communication is able to be prevented and, therefore, the efficiency of use of the wireless resources for the inter-vehicle communication and the road-vehicle communication is able to be improved. Because the wireless resource allocating apparatus 100 allocates the wireless resources to be used for the inter-vehicle communication and the road-vehicle communication within the road-vehicle communication area, the inter-vehicle communication and the road-vehicle communication are executed each using different wireless resources within the road-vehicle communication area and, therefore, interference between the inter-vehicle communication and the road-vehicle communication is able to be prevented.

An arbitrary part of or the whole of each processing function executed in the wireless resource allocating apparatus and the on-vehicle apparatuses may be realized in a program analyzed and executed by a CPU (central processing unit) or may be realized as hardware by wired logics.

A wireless resource allocating apparatus, an on-vehicle apparatus, a wireless resource allocating system, and a wireless resource allocating method disclosed herein exert an effect that the efficiency of use of the wireless resources that are allocated to communication among on-vehicle apparatuses and communication between on-vehicle apparatuses and communicating apparatuses other than the on-vehicle apparatuses are enabled to be improved.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present invention has been described in detail, it should be understood that the various changes, substitutions, and alterations could be made hereto without departing from the scope of the invention.

## Claims

1. A wireless resource allocating apparatus (100) comprising:
a receiving unit (122) arranged to receive a signal that indicates that an on-vehicle apparatus (200) loaded on a vehicle is present within a predetermined area;
a calculating unit (131) arranged to calculate the number of the on-vehicle apparatuses (200) present within the predetermined area from the signal received by the receiving unit (122);
a determining unit (132) arranged to determine a ratio of wireless resources to be used for inter-vehicle communication between the on-vehicle apparatuses (200) present within the predetermined area and road-vehicle communication between the on-vehicle apparatus (200) and a roadside apparatus by retrieving the ratio using the number of the on-vehicle apparatuses (200) calculated by the calculating unit (131) as a key from a storage (133) which stores the number in association with the ratio;
an allocating unit (134) arranged to allocate the wireless resources to be used for the inter-vehicle communication and the road-vehicle communication based on the ratio determined by the determining unit (132); and
an instructing unit (123) arranged to instruct the on-vehicle apparatus (200) present within the predetermined area to use the wireless resources allocated by the allocating unit (134);
wherein the allocating unit (134) is arranged to allocate the wireless resources to only the road-vehicle communication when the number of the on-vehicle apparatuses (200) present within the predetermined area is equal to or larger than a predetermined number that indicates a saturated state of the on-vehicle apparatuses (200) present in the predetermined area.

2. The wireless resource allocating apparatus according to claim 1, wherein
the allocating unit (134) is arranged to allocate the wireless resources only to the road-vehicle communication when the number of the on-vehicle apparatuses (200) present within the predetermined area is zero or one.

3. The wireless resource allocating apparatus according to claim 1 or 2, wherein
the allocating unit (134) is arranged to allocate the wireless resources by distributing a plurality of time slots in a frame that indicates a communication unit time period to the inter-vehicle communication and the road-vehicle communication based on the number of the on-vehicle apparatuses (200) calculated by the calculating unit (131).

4. The wireless resource allocating apparatus according to claim 1 or 2, wherein
the allocating unit (134) is arranged to allocate the wireless resources by distributing a plurality of frames in frames that indicate a communication unit time period to the inter-vehicle communication and the road-vehicle communication based on the number of the on-vehicle apparatuses (200) calculated by the calculating unit (131).

5. The wireless resource allocating apparatus according to claim 1 or 2, wherein
the allocating unit (134) is arranged to allocate a frequency band that is useable in the predetermined area to the inter-vehicle communication and the road-vehicle communication by dividing the frequency band for the inter-vehicle communication and the road-vehicle communication based on the number of the on-vehicle apparatuses (200) calculated by the calculating unit (131).

6. The wireless resource allocating apparatus according to claim 1 or 2, wherein
the allocating unit (134) allocates a frequency band that is usable within the predetermined area to a plurality of combinations obtained by selecting at least one of the inter-vehicle communication and the road-vehicle communication by dividing the frequency band for the combinations, and further allocates a plurality of time slots in a frame based on the number of the on-vehicle apparatuses (200) calculated by the calculating unit (131) to communication of the combinations by distributing the time slots to the communication of the combinations.

7. An on-vehicle apparatus (200) comprising:
a receiving unit (263) arranged to receive an instruction of allocation of wireless resources to be used for execution of inter-vehicle communication between on-vehicle apparatuses (200) each loaded on a vehicle present within a predetermined area and road-vehicle communication between the on-vehicle apparatuses (200) and a communicating apparatus other than the on-vehicle apparatuses (200), the allocation of wireless resources being determined by a wireless resource allocating unit (134) receiving a signal that indicates that the on-vehicle apparatus (200) loaded on a vehicle is present within a predetermined area, calculating the number of the on-vehicle apparatuses (200) present within the predetermined area from the received signal, determining a ratio of wireless resources to be used for inter-vehicle communication between the on-vehicle apparatuses (200) present within the predetermined area and road-vehicle communication between the on-vehicle apparatus (200) and a roadside apparatus by retrieving the ratio using the calculated number of the on-vehicle apparatuses (200) as a key from a storage (133) which stores the number in association with the ratio, and allocating the wireless resources to be used for the inter-vehicle communication and the road-vehicle communication based on the determined ratio; and
a communicating unit (230) responsive to the instruction received by the receiving unit (263) to execute the inter-vehicle communication using the wireless resources allocated to the inter-vehicle communication and that executes the road-vehicle communication using the wireless resources allocated to the road-vehicle communication;
wherein the wireless resources are allocated to only the road-vehicle communication when the number of the on-vehicle apparatuses (200) present within the predetermined area is equal to or larger than a predetermined number that indicates a saturated state of the on-vehicle apparatuses (200) present in the predetermined area.

8. A wireless resource allocating system comprising an on-vehicle apparatus (200) loaded on a vehicle and a wireless resource allocating apparatus, wherein
the wireless resource allocating apparatus comprises:
a receiving unit (122) arranged to receive a signal that indicates that the on-vehicle apparatuses (200) is present within a predetermined area;
a calculating unit (131) arranged to calculate the number of the on-vehicle apparatuses (200) present within the predetermined area from the signal received by the receiving unit (122);
a determining unit (132) arranged to determine a ratio of wireless resources to be used for inter-vehicle communication between the on-vehicle apparatuses (200) present within the predetermined area and road-vehicle communication between the on-vehicle apparatus (200) and a roadside apparatus by retrieving the ratio using the number of the on-vehicle apparatuses (200) calculated by the calculating unit (131) as a key from a storage (133) which stores the number is association with the ratio;
an allocating unit (134) arranged to allocate the wireless resources to be used for the inter-vehicle communication and the road-vehicle communication based on the ratio determined by the determining unit (132); and
an instructing unit (123) arranged to instruct the on-vehicle apparatus (200) present within the predetermined area to use the wireless resources allocated by the allocating unit (134), and wherein
the on-vehicle apparatus (200) comprises:
a receiving unit (263) arranged to receive an instruction of allocation of wireless resources to be used for the inter-vehicle communication and the road-vehicle communication instructed by the instructing unit (123); and
a communicating unit (230) responsive to the instruction received by the receiving unit (122) to execute the inter-vehicle communication using the wireless resources allocated to the inter-vehicle communication and that executes the road-vehicle communication using the wireless resources allocated to the road-vehicle communication;
wherein the allocating unit (134) is arranged to allocate the wireless resources to only the road-vehicle communication when the number of the on-vehicle apparatuses present within the predetermined area is equal to or larger than a predetermined number that indicates a saturated state of the on-vehicle apparatuses present in the predetermined area.

9. A wireless resource allocating method comprising:
receiving a signal that indicates that an on-vehicle apparatus (200) loaded on a vehicle is present within a predetermined area;
calculating the number of the on-vehicle apparatuses (200) present within the predetermined area from the received signal;
determining a ratio of wireless resources to be used for inter-vehicle communication between the on-vehicle apparatuses (200) present within the predetermined area and road-vehicle communication between the on-vehicle apparatus (200) and a roadside apparatus by retrieving the ratio using the calculated number of the on-vehicle apparatuses (200) as a key from a storage (133) which stores the number in association with the ratio;
allocating the wireless resources to be used for the inter-vehicle communication and the road-vehicle communication based on the determined ratio; and
instructing the on-vehicle apparatus (200) present within the predetermined area to use the allocated wireless resources;
wherein the allocating includes allocating the wireless resources to only the road-vehicle communication when the number of the on-vehicle apparatuses present within the predetermined area is equal to or larger than a predetermined number that indicates a saturated state of the on-vehicle apparatuses present in the predetermined area.

## Patentansprüche

1. Zuweisungsvorrichtung für drahtlose Ressourcen (100), Folgendes umfassend:
eine Empfangseinheit (122), die dafür angeordnet ist, ein Signal zu empfangen, das anzeigt, dass sich eine An-Bord-Vorrichtung (200), die sich in einem Fahrzeug befindet, in einem festgelegten Bereich befindet,
eine Berechnungseinheit (131), die dafür angeordnet ist, aus dem von der Empfangseinheit (122) empfangenen Signal die Anzahl der An-Bord-Vorrichtungen (200) zu berechnen, die sich in dem festgelegten Bereich befinden,
eine Bestimmungseinheit (132), die dafür angeordnet ist, ein Verhältnis von drahtlosen Ressourcen zu bestimmen, die für die Fahrzeug-zu-Fahrzeug-Kommunikation zwischen den im festgelegten Bereich befindlichen An-Bord-Vorrichtungen (200) und die Straße-zu-Fahrzeug-Kommunikation zwischen der An-Bord-Vorrichtung (200) und einer straßenseitigen Vorrichtung verwendet werden sollen, indem das Verhältnis unter Verwendung der Anzahl der durch die Berechnungseinheit (131) berechneten An-Bord-Vorrichtungen (200) als eine Schlüsselzahl aus einem Speicher (133) abgerufen wird, der die Anzahl in Verbindung mit dem Verhältnis speichert,
eine Zuweisungseinheit (134), die dafür angeordnet ist, basierend auf dem durch die Bestimmungseinheit (132) bestimmten Verhältnis, die drahtlosen Ressourcen zuzuweisen, die für die Fahrzeug-zu-Fahrzeug-Kommunikation und die Straße-zu-Fahrzeug-Kommunikation verwendet werden sollen, und
eine Befehlseinheit (123), die dafür angeordnet ist, die im festgelegten Bereich befindliche An-Bord-Vorrichtung (200) anzuweisen, die von der Zuweisungseinheit (134) zugewiesenen drahtlosen Ressourcen zu verwenden,
wobei die Zuweisungseinheit (134) dafür angeordnet ist, die drahtlosen Ressourcen nur der Straße-zu-Fahrzeug-Kommunikation zuzuweisen, wenn die Anzahl der im festgelegten Bereich befindlichen An-Bord-Vorrichtungen (200) gleich oder größer als eine festgelegte Anzahl ist, die einen gesättigten Zustand der im festgelegten Bereich befindlichen An-Bord-Vorrichtungen (200) anzeigt.

2. Zuweisungsvorrichtung für drahtlose Ressourcen nach Anspruch 1, wobei die Zuweisungseinheit (134) dafür angeordnet ist, die drahtlosen Ressourcen nur der Straße-zu-Fahrzeug-Kommunikation zuzuweisen, wenn die Anzahl der im festgelegten Bereich befindlichen An-Bord-Vorrichtungen (200) null oder eins ist.

3. Zuweisungsvorrichtung für drahtlose Ressourcen nach Anspruch 1 oder 2, wobei die Zuweisungseinheit (134) dafür angeordnet ist, die drahtlosen Ressourcen durch Verteilen mehrerer Zeitfenster in einem Frame zuzuweisen, der, basierend auf der von der Berechnungseinheit (131) berechneten Anzahl der An-Bord-Vorrichtungen (200), eine Zeitperiode für eine Kommunikationseinheit zur Fahrzeug-zu-Fahrzeug-Kommunikation und der Straße-zu-Fahrzeug-Kommunikation anzeigt.

4. Zuweisungsvorrichtung für drahtlose Ressourcen nach Anspruch 1 oder 2, wobei die Zuweisungseinheit (134) dafür angeordnet ist, die drahtlosen Ressourcen durch Verteilen mehrerer Frames in Frames zuzuweisen, die, basierend auf der von der Berechnungseinheit (131) berechneten Anzahl der An-Bord-Vorrichtungen (200), eine Zeitperiode für eine Kommunikationseinheit zur Fahrzeug-zu-Fahrzeug-Kommunikation und der Straße-zu-Fahrzeug-Kommunikation anzeigen.

5. Zuweisungsvorrichtung für drahtlose Ressourcen nach Anspruch 1 oder 2, wobei die Zuweisungseinheit (134) dafür angeordnet ist, ein Frequenzband zuzuweisen, das in dem festgelegten Bereich für die Fahrzeug-zu-Fahrzeug-Kommunikation und die Straße-zu-Fahrzeug-Kommunikation verwendbar ist, indem das Frequenzband basierend auf der durch die Berechnungseinheit (131) berechneten Anzahl der An-Bord-Vorrichtungen (200) für die Fahrzeug-zu-Fahrzeug-Kommunikation und die Straße-zu-Fahrzeug-Kommunikation aufgeteilt wird.

6. Zuweisungsvorrichtung für drahtlose Ressourcen nach Anspruch 1 oder 2, wobei
die Zuweisungseinheit (134) ein Frequenzband, das im festgelegten Bereich verwendbar ist, mehreren Kombinationen zuweist, die durch Auswählen der Fahrzeug-zu-Fahrzeug-Kommunikation oder/oder der Straße-zu-Fahrzeug-Kommunikation erzielt werden, indem das Frequenzband für die Kombinationen aufgeteilt wird, und ferner, basierend auf der Anzahl der durch die Berechnungseinheit (131) berechneten An-Bord-Vorrichtungen (200), mehrere Zeitfenster für die Kommunikation der Kombinationen zuweist, indem die Zeitfenster auf die Kommunikation der Kombinationen verteilt wird.

7. An-Bord-Vorrichtung (200), Folgendes umfassend:
eine Empfangseinheit (263), die dafür angeordnet ist, einen Befehl zur Zuweisung drahtloser Ressourcen zu empfangen, die zum Ausführen der Fahrzeug-zu-Fahrzeug-Kommunikation zwischen An-Bord-Vorrichtungen (200) verwendet werden sollen, die sich jeweils in einem Fahrzeug befinden, das sich in einem festgelegten Bereich befindet, und der Straße-zu-Fahrzeug-Kommunikation zwischen den An-Bord-Vorrichtungen (200) und einer anderen Kommunikationsvorrichtung als den An-Bord-Vorrichtungen (200), wobei die Zuweisung der drahtlosen Ressourcen dadurch bestimmt wird, dass eine Zuweisungseinheit für drahtlose Ressourcen (134) ein Signal empfängt, das anzeigt, dass sich die in einem Fahrzeug befindliche An-Bord-Vorrichtung (200) in einem festgelegten Bereich befindet, aus dem empfangenen Signal die Anzahl der im festgelegten Bereich befindlichen An-Bord-Vorrichtungen (200) berechnet, ein Verhältnis drahtloser Ressourcen bestimmt, die für die Fahrzeug-zu-Fahrzeug-Kommunikation zwischen den im festgelegten Bereich befindlichen An-Bord-Vorrichtungen (200) und die Straße-zu-Fahrzeug-Kommunikation zwischen der An-Bord-Vorrichtung (200) und einer straßenseitigen Vorrichtung verwendet werden soll, indem das Verhältnis unter Verwendung der berechneten Anzahl der An-Bord-Vorrichtungen (200) als eine Schlüsselzahl aus einem Speicher (133) abgerufen wird, der die Anzahl in Verbindung mit dem Verhältnis speichert, und, basierend auf dem bestimmten Verhältnis, die drahtlosen Ressourcen zuweist, die für die Fahrzeug-zu-Fahrzeug-Kommunikation und die Straße-zu-Fahrzeug-Kommunikation verwendet werden sollen, und
eine Kommunikationseinheit (230), die auf den durch die Empfangseinheit (263) empfangenen Befehl reagiert, um unter Verwendung der drahtlosen Ressourcen, die der Fahrzeug-zu-Fahrzeug-Kommunikation zugewiesen wurden, die Fahrzeug-zu-Fahrzeug-Kommunikation auszuführen, und die unter Verwendung der drahtlosen Ressourcen, die der Straße-zu-Fahrzeug-Kommunikation zugewiesen wurden, die Straße-zu-Fahrzeug-Kommunikation ausführt,
wobei die drahtlosen Ressourcen nur der Straße-zu-Fahrzeug-Kommunikation zugewiesen werden, wenn die Anzahl der im festgelegten Bereich befindlichen An-Bord-Vorrichtungen (200) gleich oder größer ist als eine festgelegte Anzahl, die einen gesättigten Zustand der im festgelegten Bereich befindlichen An-Bord-Vorrichtungen (200) anzeigt.

8. Zuweisungssystem für drahtlose Ressourcen, das eine in einem Fahrzeug befindliche An-Bord-Vorrichtung (200) und eine Zuweisungsvorrichtung für drahtlose Ressourcen umfasst, wobei die Zuweisungsvorrichtung für drahtlose Ressourcen Folgendes umfasst:
eine Empfangseinheit (122), die dafür angeordnet ist, ein Signal zu empfangen, das anzeigt, dass sich eine An-Bord-Vorrichtung (200), die sich in einem Fahrzeug befindet, in einem festgelegten Bereich befindet,
eine Berechnungseinheit (131), die dafür angeordnet ist, aus dem von der Empfangseinheit (122) empfangenen Signal die Anzahl der An-Bord-Vorrichtungen (200) zu berechnen, die sich in dem festgelegten Bereich befinden,
eine Bestimmungseinheit (132), die dafür angeordnet ist, ein Verhältnis von drahtlosen Ressourcen zu bestimmen, die für die Fahrzeug-zu-Fahrzeug-Kommunikation zwischen den im festgelegten Bereich befindlichen An-Bord-Vorrichtungen (200) und die Straße-zu-Fahrzeug-Kommunikation zwischen der An-Bord-Vorrichtung (200) und einer straßenseitigen Vorrichtung verwendet werden sollen, indem das Verhältnis unter Verwendung der Anzahl der durch die Berechnungseinheit (131) berechneten An-Bord-Vorrichtungen (200) als eine Schlüsselzahl von einem Speicher (133) abgerufen wird, der die Anzahl in Verbindung mit dem Verhältnis speichert,
eine Zuweisungseinheit (134), die dafür angeordnet ist, basierend auf dem durch die Bestimmungseinheit (132) bestimmten Verhältnis, die drahtlosen Ressourcen zuzuweisen, die für die Fahrzeug-zu-Fahrzeug-Kommunikation und die Straße-zu-Fahrzeug-Kommunikation verwendet werden sollen, und
eine Befehlseinheit (123), die dafür angeordnet ist, die im festgelegten Bereich befindliche An-Bord-Vorrichtung (200) anzuweisen, die von der Zuweisungseinheit (134) zugewiesenen drahtlosen Ressourcen zu verwenden, und wobei
die An-Bord-Vorrichtung (200) Folgendes umfasst:
eine Empfangseinheit (263), die dafür angeordnet ist, einen Befehl zur Zuweisung drahtloser Ressourcen zu empfangen, die für die Fahrzeug-zu-Fahrzeug-Kommunikation und die Straße-zu-Fahrzeug-Kommunikation verwendet werden sollen, die durch die Befehlseinheit (123) angewiesen wurde, und
eine Kommunikationseinheit (230), die auf den durch die Empfangseinheit (122) empfangenen Befehl reagiert, um unter Verwendung der drahtlosen Ressourcen, die der Fahrzeug-zu-Fahrzeug-Kommunikation zugewiesen wurden, die Fahrzeug-zu-Fahrzeug-Kommunikation auszuführen, und die unter Verwendung der drahtlosen Ressourcen, die der Straße-zu-Fahrzeug-Kommunikation zugewiesen wurden, die Straße-zu-Fahrzeug-Kommunikation ausführt,
wobei die Zuweisungseinheit (134) dafür angeordnet ist, die drahtlosen Ressourcen nur der Straße-zu-Fahrzeug-Kommunikation zuzuweisen, wenn die Anzahl der im festgelegten Bereich befindlichen An-Bord-Vorrichtungen gleich oder größer ist als eine festgelegte Anzahl, die einen gesättigten Zustand der im festgelegten Bereich befindlichen An-Bord-Vorrichtungen anzeigt.

9. Zuweisungsverfahren für drahtlose Ressourcen, Folgendes umfassend:
Empfangen eines Signals, das anzeigt, dass sich eine An-Bord-Vorrichtung (200), die sich in einem Fahrzeug befindet, in einem festgelegten Bereich befindet,
Berechnen der Anzahl der im festgelegten Bereich befindlichen An-Bord-Vorrichtungen (200) aus dem empfangenen Signal,
Bestimmen eines Verhältnisses drahtloser Ressourcen, die für die Fahrzeug-zu-Fahrzeug-Kommunikation zwischen den im festgelegten Bereich befindlichen An-Bord-Vorrichtungen (200) verwendet werden sollen und für die Straße-zu-Fahrzeug-Kommunikation zwischen den An-Bord-Vorrichtungen (200) und einer straßenseitigen Vorrichtung, indem das Verhältnis unter Verwendung der berechneten Anzahl der An-Bord-Vorrichtungen (200) als eine Schlüsselzahl aus einem Speicher (133) abgerufen wird, der die Anzahl in Verbindung mit dem Verhältnis speichert,
Zuweisen der drahtlosen Ressourcen, die für die Fahrzeug-zu-Fahrzeug-Kommunikation und die Straße-zu-Fahrzeug-Kommunikation verwendet werden sollen, basierend auf dem bestimmten Verhältnis, und
Anweisen der An-Bord-Vorrichtung (200), die sich im festgelegten Bereich befindet, die zugewiesenen drahtlosen Ressourcen zu verwenden,
wobei das Zuweisen das Zuweisen der drahtlosen Ressourcen nur für die Straße-zu-Fahrzeug-Kommunikation beinhaltet, wenn die Anzahl der im festgelegten Bereich befindlichen An-Bord-Vorrichtungen gleich oder größer als eine festgelegte Anzahl ist, die einen gesättigten Zustand der im festgelegten Bereich befindlichen An-Bord-Vorrichtungen anzeigt.

## Revendications

1. Dispositif d'allocation de ressources sans fil (100) comprenant :
une unité de réception (122) agencée pour recevoir un signal qui indique qu'un dispositif embarqué sur un véhicule (200) chargé sur un véhicule est présent dans une zone prédéterminée ;
une unité de calcul (131) agencée pour calculer le nombre de dispositifs embarqués sur un véhicule (200) présents dans la zone prédéterminée d'après le signal reçu par l'unité de réception (122) ;
une unité de détermination (132) agencée pour déterminer le rapport des ressources sans fil à utiliser pour une communication entre véhicules entre les dispositifs embarqués sur un véhicule (200) présents dans la zone prédéterminée et une communication route-véhicule entre le dispositif embarqué sur un véhicule (200) et un appareil de signalisation routière en récupérant le rapport utilisant le nombre de dispositifs embarqués sur un véhicule (200) calculé par l'unité de calcul (131) en tant que clé d'une mémoire (133) qui mémorise le nombre en association avec le rapport ;
une unité d'allocation (134) agencée pour allouer les ressources sans fil à utiliser pour la communication entre véhicules et la communication route-véhicule en se basant sur le rapport déterminé par l'unité de détermination (132) ; et
une unité d'instruction (123) agencée pour demander aux dispositifs embarqués sur un véhicule (200) présents dans la zone prédéterminée d'utiliser les ressources sans fil allouées par l'unité d'allocation (134) ;
dans lequel l'unité d'allocation (134) est agencée pour allouer les ressources sans fil uniquement à la communication route-véhicule lorsque le nombre de dispositifs embarqués sur un véhicule (200) présents dans la zone prédéterminée est supérieur ou égal à un nombre prédéterminé qui indique un état saturé des dispositifs embarqués sur un véhicule (200) présents dans la zone prédéterminée.

2. Dispositif d'allocation de ressources sans fil selon la revendication 1, dans lequel
l'unité d'allocation (134) est agencée pour allouer les ressources sans fil uniquement à la communication route-véhicule lorsque le nombre de dispositifs embarqués sur un véhicule (200) présents dans la zone prédéterminée est de zéro ou un.

3. Dispositif d'allocation de ressources sans fil selon la revendication 1 ou 2, dans lequel
l'unité d'allocation (134) est agencée pour allouer les ressources sans fil en distribuant une pluralité de créneaux temporels dans une trame qui indique une période de temps d'unité de communication à la communication entre véhicules et la communication route-véhicule en se basant sur le nombre de dispositifs embarqués sur un véhicule (200) calculé par l'unité de calcul (131).

4. Dispositif d'allocation de ressources sans fil selon la revendication 1 ou 2, dans lequel
l'unité d'allocation (134) est agencée pour allouer les ressources sans fil en distribuant une pluralité de trames dans des trames indiquant une période de temps d'unité de communication pour la communication entre véhicules et la communication route-véhicule en se basant sur le nombre de dispositifs embarqués sur un véhicule (200) calculé par l'unité de calcul (131).

5. Dispositif d'allocation de ressources sans fil selon la revendication 1 ou 2, dans lequel
l'unité d'allocation (134) est agencée pour allouer une bande de fréquences utilisable dans la zone prédéterminée pour la communication entre véhicules et la communication route-véhicule en divisant la bande de fréquences pour la communication entre véhicules et la communication route-véhicule en se basant sur le nombre de dispositifs embarqués sur un véhicule (200) calculé par l'unité de calcul (131).

6. Dispositif d'allocation de ressources sans fil selon la revendication 1 ou 2, dans lequel
l'unité d'allocation (134) alloue une bande de fréquences qui est utilisable dans la zone prédéterminée à une pluralité de combinaisons obtenues en sélectionnant au moins une communication parmi la communication entre véhicules et la communication route-véhicule en divisant la bande de fréquences pour les combinaisons, et alloue en outre une pluralité de créneaux temporels dans une trame en se basant sur le nombre de dispositifs embarqués sur un véhicule (200) calculé par l'unité de calcul (131) pour communication des combinaisons par distribution des créneaux temporels à la communication des combinaisons.

7. Dispositif embarqué sur un véhicule (200) comprenant :
une unité de réception (263) agencée pour recevoir une instruction d'allocation de ressources sans fil à utiliser pour exécution d'une communication entre véhicules entre des dispositifs embarqués sur un véhicule (200) chargés chacun sur un véhicule présent dans une zone prédéterminée et une communication route-véhicule entre les dispositifs embarqués sur un véhicule (200) et un dispositif de communication différent des dispositifs embarqués sur un véhicule (200), l'allocation des ressources sans fil étant déterminée par une unité d'allocation de ressources sans fil (134) qui reçoit un signal qui indique que le dispositif embarqué sur un véhicule (200) chargé sur un véhicule est présent dans une zone prédéterminée, calcule le nombre de dispositifs embarqués sur un véhicule (200) présents dans la zone prédéterminée d'après le signal reçu, détermine le rapport des ressources sans fil à utiliser pour la communication entre véhicules entre les dispositifs embarqués sur un véhicule (200) présents dans la zone prédéterminée et une communication route-véhicule entre le dispositif embarqué sur un véhicule (200) et un appareil de signalisation routière en récupérant le rapport utilisant le nombre calculé de dispositifs embarqués sur un véhicule (200) en tant que clé d'une mémoire (133) qui mémorise le nombre en association avec le rapport, et alloue les ressources sans fil à utiliser pour la communication entre véhicules et la communication route-véhicule en se basant sur le rapport déterminé ; et
une unité de communication (230) réagissant à l'instruction reçue par l'unité de réception (263) pour exécuter la communication entre véhicules en utilisant les ressources sans fil allouées à la communication entre véhicules et qui exécute la communication route-véhicule utilisant les ressources sans fil allouées à la communication route-véhicule ;
dans lequel les ressources sans fil sont allouées uniquement à la communication route-véhicule lorsque le nombre de dispositifs embarqués sur un véhicule (200) présents dans la zone prédéterminée est supérieur ou égal à un nombre prédéterminé qui indique un état saturé des dispositifs embarqués sur un véhicule (200) présents dans la zone prédéterminée.

8. Système d'allocation de ressources sans fil comprenant un dispositif embarqué sur un véhicule (200) chargé sur un véhicule et un dispositif d'allocation de ressources sans fil, dans lequel
le dispositif d'allocation de ressources sans fil comprend :
une unité de réception (122) agencée pour recevoir un signal qui indique que le dispositif embarqué sur un véhicule (200) chargé sur un véhicule est présent dans une zone prédéterminée ;
une unité de calcul (131) agencée pour calculer le nombre de dispositifs embarqués sur un véhicule (200) présents dans la zone prédéterminée d'après le signal reçu par l'unité de réception (122) ;
une unité de détermination (132) agencée pour déterminer le rapport des ressources sans fil à utiliser pour une communication entre véhicules entre les dispositifs embarqués sur un véhicule (200) présents dans la zone prédéterminée et une communication route-véhicule entre le dispositif embarqué sur un véhicule (200) et un appareil de signalisation routière en récupérant le rapport utilisant le nombre de dispositifs embarqués sur un véhicule (200) calculé par l'unité de calcul (131) en tant que clé d'une mémoire (133) qui mémorise le nombre en association avec le rapport ;
une unité d'allocation (134) agencée pour allouer les ressources sans fil à utiliser pour la communication entre véhicules et la communication route-véhicule en se basant sur le rapport déterminé par l'unité de détermination (132) ; et
une unité d'instruction (123) agencée pour demander aux dispositifs embarqués sur un véhicule (200) présents dans la zone prédéterminée d'utiliser les ressources sans fil allouées par l'unité d'allocation (134) ; et dans lequel
le dispositif embarqué sur un véhicule (200) comprend :
une unité de réception (263) agencée pour recevoir une instruction d'allocation de ressources sans fil à utiliser pour la communication entre véhicules et la communication route-véhicule, demandée par l'unité d'instruction (123) ; et
une unité de communication (230) réagissant à l'instruction reçue par l'unité de réception (122) pour exécuter la communication entre véhicules utilisant les ressources sans fil allouées à la communication entre véhicules et qui exécute la communication route-véhicule utilisant les ressources sans fil allouées à la communication route-véhicule ;
dans lequel l'unité d'allocation (134) est agencée pour allouer les ressources sans fil uniquement à la communication route-véhicule lorsque le nombre de dispositifs embarqués sur un véhicule présents dans la zone prédéterminée est supérieur ou égal à un nombre prédéterminé qui indique un état saturé des dispositifs embarqués sur un véhicule présents dans la zone prédéterminée.

9. Procédé d'allocation de ressources sans fil comprenant :
la réception d'un signal qui indique qu'un dispositif embarqué sur un véhicule (200) chargé sur un véhicule est présent dans une zone prédéterminée ;
le calcul du nombre de dispositifs embarqués sur un véhicule (200) présents dans la zone prédéterminée d'après le signal reçu ;
la détermination du rapport des ressources sans fil à utiliser pour une communication entre véhicules entre les dispositifs embarqués sur un véhicule (200) présents dans la zone prédéterminée et une communication route-véhicule entre le dispositif embarqué sur un véhicule (200) et un appareil de signalisation routière en récupérant le rapport utilisant le nombre de dispositifs embarqués sur un véhicule (200) calculé par l'unité de calcul (131) en tant que clé d'une mémoire (133) qui mémorise le nombre en association avec le rapport ;
l'allocation des ressources sans fil à utiliser pour la communication entre véhicules et la communication route-véhicule en se basant sur le rapport déterminé ; et
la demande aux dispositifs embarqués sur un véhicule (200) présents dans la zone prédéterminée d'utiliser les ressources sans fil allouées ;
dans lequel l'allocation comporte l'allocation des ressources sans fil uniquement à la communication route-véhicule lorsque le nombre de dispositifs embarqués sur un véhicule présents dans la zone prédéterminée est supérieur ou égal à un nombre prédéterminé qui indique un état saturé des dispositifs embarqués sur un véhicule présents dans la zone prédéterminée.
